# EUROPÄISCHE PATENTSCHRIFT

(11) **EP 0 889 811 B1**
(45) Veröffentlichungstag und Bekanntmachung des Hinweises auf die Patenterteilung: **22.03.2000**
(21) Anmeldenummer: 97921726.2
(22) Anmeldetag: 23.04.1997
(51) Int. Cl.: B60R 22/44, B60R 22/18

(54) **GURTSTRAFFER SOWIE EINRICHTUNG ZU SEINER BEFESTIGUNG**
BELT TENSIONER AND DEVICE FOR FASTENING THE SAME
TENDEUR DE SANGLE ET DISPOSITIF POUR SA FIXATION

(30) Priorität: 23.04.1996 DE 29607362 U
(43) Veröffentlichungstag der Anmeldung: 13.01.1999
(73) Patentinhaber: TRW Occupant Restraint Systems GmbH & Co. KG, 73551 Alfdorf (DE)
(72) Erfinder: WIER, Franz, D-73571 Göggingen (DE)
(74) Vertreter: Kitzhofer, Thomas, Dipl.-Ing.
(86) Internationale Anmeldenummer: EP9702076
(87) Internationale Veröffentlichungsnummer: WO9739922

(56) Entgegenhaltungen:
- FR-A- 2 213 231
- FR-A- 2 239 870
- GB-A- 1 571 505

## Beschreibung

Die Erfindung betrifft einen Gurtstraffer, der eine Kolben/Zylinder-Einheit aufweist, an einem Fahrzeug. Insbesondere betrifft die Erfindung eine solche Einrichtung, welche als Schraubverbindung ausgebildet ist, mit einem an dem Mantel des Zylinders geformten Gewinde und einem an einem fahrzeugfesten Teil vorgesehenen Gegengewinde, an dem der Zylinder angeschraubt wird.

Bislang werden Gurtstraffer beispielsweise durch Vorsehen eines an den Zylinder angeschweißten Flansches am Fahrzeug befestigt. Der Flansch wird an einem fahrzeugseitigen Gegenflansch angeschraubt. Unabhängig davon, ob der Flansch seitlich oder an der dem Gurtangriffsmittel abgewandten Stirnseite des Zylinders angebracht ist, wird durch diese Art der Befestigung der für den Einbau des Zylinders erforderliche Raum im Fahrzeug erhöht. Zudem wird durch das übliche Anschweißen des Befestigungsflansches die Fertigung des Gurtstraffers verteuert.

Aus der FR-A-2 239 870 ist ein Gurtstraffer mit einem Zylinder bekannt, der auf seinem unteren Ende außenseitig ein Gewinde trägt und in einen Aufnahmetopf gedreht werden kann. Dieser Aufnahmetopf hat rückseitig eine mit einem Durchgangsloch versehene Aufnahmelasche, womit der Gurtstraffer schwenkbar am Fahrzeug befestigt werden kann. Aufgrund dieses Aufnahmetopfes baut jedoch der Gurtstraffer relativ lang.

Diesen Nachteil weist auch der Gattungsbildende Gurtstraffer nach der FR-A-2 213 231 auf, bei welchem die Einrichtung zur Befestigung des Gurtstraffers ebenfalls aus einem Außengewinde auf der Außenseite des Mantels des Zylinders und einem Aufnahmetopf mit Innengewinde besteht. Dieser Aufnahmetopf wird über einen Befestigungsflansch am Fahrzeug arretiert.

Die Erfindung schafft eine axial kurz bauende, als Schraubverbindung ausgebildete Einrichtung zur Befestigung des Gurtstraffers, durch die der Gurtstraffer einfach und schnell im Fahrzeug eingebaut werden kann. Zudem ist die Herstellung der erfindungsgemäßen Einrichtung billig. Dies wird bei einem Gurtstraffer der eingangs genannten Art dadurch erreicht, daß das Gegengewinde in einer Vertiefung im Fahrzeugboden vorgesehen ist. Das Gewinde kann dabei an der Außen- oder Innenseite des Mantels des Zylinders am Gewinde vorgesehen sein und auf ein Gegengewinde aufgeschraubt werden. Aufnahmetöpfe oder Zwischenflansche, wie dies beim zuvor erwähnten Stand der Technik noch üblich war, können bei der erfindungsgemäßen Einrichtung entfallen, womit die gesamte Befestigungseinrichtung sehr preisgünstig herzustellen ist.

Die bislang übliche Befestigung mittels Schrauben oder Bolzen entfällt ebenso wie das Vorsehen von Flanschen am Fahrzeug, die der Befestigung des Gurtstraffers dienen. Daher sind weniger Einzelteile erforderlich, was Herstellung und Montageaufwand sowie das Gewicht verringert. Eine weitere Möglichkeit, diese Vorteile zu erreichen, besteht darin, die erfindungsgemäße Einrichtung als Bajonettverschluß auszubilden, mit wenigstens einer an der Außenseite des Mantels des Zylinders seitlich vorstehenden Lasche und einer an einem fahrzeugfesten Teil vorgesehenen Bajonettfassung, in die der Zylinder eingeschraubt werden kann.

Schließlich schafft die Erfindung einen Gurtstraffer mit einer Kolben/Zylinder-Einheit, der mit einem Bajonettverschluß am Fahrzeug befestigt wird, indem von der Außenseite der Mantelfläche des Zylinders wenigstens eine Lasche radial vorsteht, die Teil des Bajonettverschlusses zum Befestigen des Gurtstraffers am Fahrzeug ist.

Der erfindungsgemäßen Einrichtung mit Gewinde und der erfindungsgemäßen Einrichtung mit der radial vorstehenden Lasche an der Außenseite des Zylinders ist die Idee gemeinsam, daß die Außenkontur des Zylinders bereits als Teil der Befestigungseinrichtung dient und dadurch weniger Einzelteile zur Befestigung des Gurtstraffers benötigt werden, als dies bislang der Fall ist. Dadurch kann der Gurtstraffer insgesamt kleiner ausgebildet sein, was seine Unterbringung im Fahrzeug erleichtert.

Gemäß einer bevorzugten Ausführungsform erstreckt sich das Gewinde über die gesamte Mantelfläche des Zylinders.

Ferner kann eine Verdrehsicherung vorgesehen sein, die ein Verdrehen des Gurtstraffers nach dessen Befestigung im Fahrzeug verhindert. Eine derartige Verdrehsicherung kann z.B. eine Beschichtung des Gewindes am Zylinder, eine Kontermutter oder eine sonstige, übliche Schraubensicherung sein.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Seitenansicht einer ersten Ausführungsform des Gurtstraffers in eingebautem Zustand mit der erfindungsgemäßen Befestigungseinrichtung gemäß einer ersten Ausführungsform, wobei der Gurtstraffer mit einer Schutzkappe am unteren Ende ausgestattet ist;
Fig. 2 den in Fig. 1 gezeigten Gurtstraffer ohne Schutzkappe und die erfindungsgemäße Einrichtung nach Fig. 1;
Fig. 3 das untere Ende eines erfindungsgemäßen Gurtstraffers im eingebauten Zustand, der mit einem Bajonettverschluß als zweite Ausführungsform der erfindungsgemäßen Befestigungseinrichtung am Fahrzeugboden arretiert ist;
Fig. 4 eine Ansicht des montierten Gurtstraffers und der Befestigungseinrichtung in Richtung des Pfeiles A in Fig. 3;
Fig. 5 eine Längsschnittansicht durch den Zylinder des erfindungsgemäßen Gurtstraffers und einer dritten Ausführungsform der erfindungsgemäßen Befestigungseinrichtung;
Fig. 6 eine Längsschnittansicht durch eine an einer Sitzschiene befestigte Schraube mit Außengewinde, die Teil einer Befestigungseinrichtung gemäß einer vierten Ausführungsform ist; und
Fig. 7 eine Schnittansicht durch einen Fahrzeugboden mit daran befestigtem Gurtstraffer.

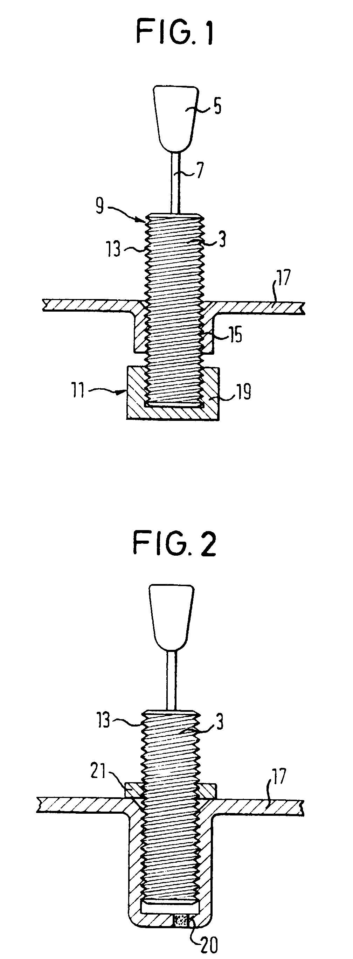

In Fig. 1 ist ein Gurtstraffer in Form eines Linearschloßstraffers gezeigt. Der Gurtstraffer umfaßt eine Kolben/Zylinder-Einheit, von der nur der Zylinder 3 zu sehen ist. Ein Gurtschloß 5 als Gurtangriffseinrichtung ist durch ein Zugübertagungsmittel 7 in Form eines Seiles mit dem Kolben verbunden. Der Zylinder 3 hat zwei axiale Enden, nämlich ein dem Gurtschloß 5 zugewandtes Ende 9 sowie ein diesem abgewandtes, unteres Ende 11. An der Außenseite der Mantelfläche des Zylinders 3 ist ein Gewinde 13 als erster Teil einer Befestigungseinrichtung geformt, mit dem der Zylinder 3 in ein Gegengewinde 15 als zweiter Teil einer Befestigungseinrichtung eingedreht werden kann, wobei das Gegengewinde 15 in einer im Fahrzeugboden vorgesehenen Durchgangsöffnung vorgesehen ist. Da sich das Gewinde 13 über die gesamte Mantelfläche des Zylinders 3 erstreckt, kann der Gurtstraffer mehr oder weniger tief in den Fahrzeugboden 17 eingedreht werden. Bei dieser Einrichtung zur Gurtstrafferbefestigung ist im Fahrzeuginneren für die Unterbringung des Gurtstraffers nur noch ein geringer Bauraum notwendig.

Der Zylinder 3 ragt mit seinem unteren Ende 11 aus der Öffnung im Fahrzeugboden 17 nach unten heraus. Eine auf das Ende 11 aufgedrehte Schutzkappe 19 verhindert eine Beschädigung des Zylinders 3 durch Einflüsse wie Steinschlag oder Korrosion.

Da die Stirnseite des Zylinders 3 am unteren Ende 11 offen ist, wird die Schutzkappe 19 beim Rückstrammvorgang vom Zylinder 3 weggerissen. Dies kann einerseits durch das vom Kolben verdrängte Gasvolumen erfolgen oder durch direkten Kontakt des Kolbens mit der Schutzkappe 19.

Bei der in Fig. 2 dargestellten Ausführungsform ist die Schutzkappe 19 nicht notwendig, da der Fahrzeugboden 17 keine Durchgangsöffnung, sondern eine nach unten geschlossene Vertiefung aufweist, in die der Zylinder 3 hineinragt, so daß der Zylinder nach außen hin geschützt ist. Eine Verdrehsicherung 21 in Form einer Kontermutter sichert die axiale und radiale Lage des Gurtstraffers. Eine Entlüftungsöffnung 20 am Boden der Vertiefung ist mit einer elastischen Dichtungsmasse verschlossen, die aufgrund des Gasdrucks bei betätigtem Gurtstraffer entfernt wird und die Entlüftungsöffnung 20 freilegt.

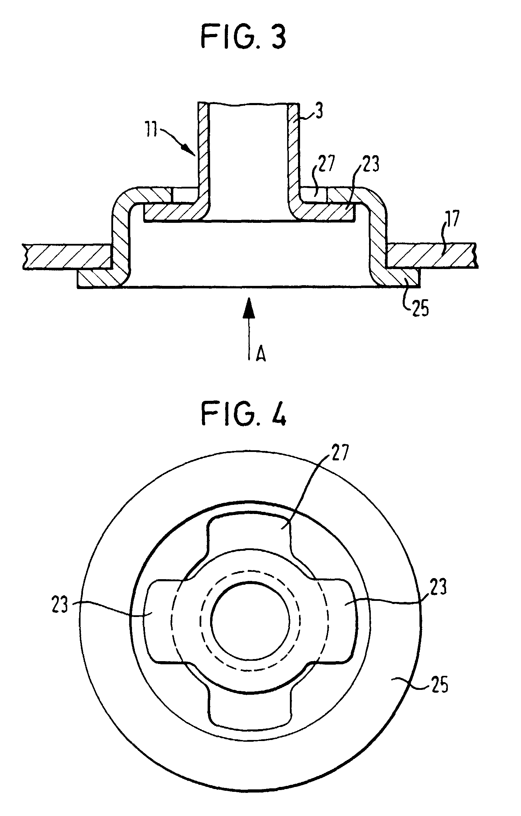

Bei der in Fig. 3 gezeigten Ausführungsform des Gurtstraffers hat dieser an seinem unteren Ende 11 zwei gegenüberliegende, radial abstehende Laschen 23, die der Befestigung des Gurtstraffers in einer Öffnung im Fahrzeugboden 17 dienen und Teil einer zweiten Ausführungsform einer Befestigungseinrichtung sind. In diese Öffnung ist ein topfartiges, zur Befestigungseinrichtung gehörendes Teil 25 mit einer Ausnehmung 27 eingepreßt. Die Ausnehmung 27 hat eine an die Außenkon tur des Zylinders 3 und der Laschen 23 angepaßte Kontur, die ein Einstecken des Zylinders 3 von oben her erlaubt und nach Verdrehen des Zylinders um 90° ein Herausziehen des Zylinders 3 verhindert. Diese Art der Befestigung des Zylinders 3 stellt einen Bajonettverschluß dar, so daß der Zylinder 3 schnell im Fahrzeugboden befestigt werden kann. Die Laschen 23 werden durch seitliches Umbiegen der Zylinderwandung gebildet, was eine kostengünstige Herstellung erlaubt. Das Teil 25, das eine Bajonettfassung bildet, kann nach unten hin auch durch eine Wandung, die gleichzeitig als Auflage für die Laschen 23 dient, geschlossen sein. Ferner kann beispielsweise auch eine Rasteinrichtung vorgesehen sein, die als Verdrehsicherung dient, wie es bei Bajonettverschlüssen üblich ist.

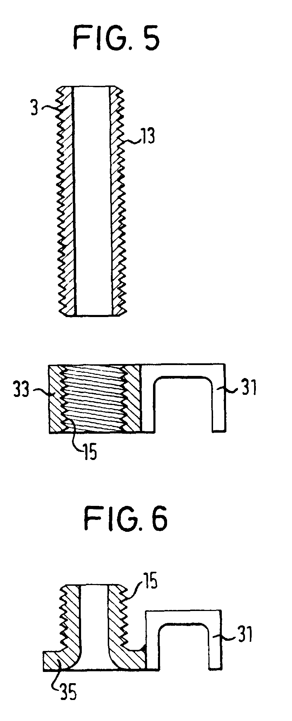

Der gezeigte Gurtstraffer kann durch das Vorsehen des Außengewindes oder des Bajonettverschlusses auch raumsparend an einem Fahrzeugsitz und insbesondere an der Rücksitzbank in der Nähe ihrer Verankerung befestigt werden, indem z.B. an die Sitzschiene 31 eine Mutter 33 (Fig. 5) oder eine Schraube 35 (Fig. 6) geschweißt ist, die ein einfaches, schnelles Befestigen des Gurtstraffers erlaubt. Bei der in Fig. 6 gezeigten Ausführungsform hat der auf die hülsenförmige Schraube 35 aufzudrehende Zylinder eine offene untere Stirnwand und ein Innengewinde.

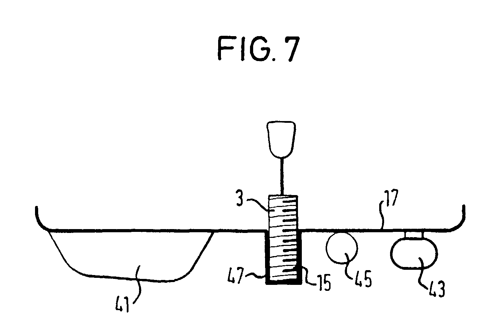

In Fig. 7 ist dargestellt, an welcher Stelle die Einrichtung zur Befestigung des Gurtstraffers am geeignetsten angeordnet ist. Von der Unterseite des Fahrzeugbodens 17 stehen nach unten Fahrzeugbodenabschnitte, z.B. für den Fahrzeugtank 41, vor. Ferner sind unterhalb des Fahrzeugbodens angeordnete Fahrzeugteile wie Auspuff 43 und Kardanwelle 45 vorgesehen. Zwischen einem oder mehreren solchen vorstehenden Fahrzeugbodenabschnitten und Fahrzeugteilen sollte die Befestigung für den Gurtstraffer vorgesehen sein. Eine vorteilhafte Lage der Vertiefung 47, die mit dem Gegengewinde als einem Teil der Einrichtung zur Befestigung des Gurtstraffers versehen ist, ist zwischen dem Tank 41, der Kardanwelle 45 und dem Auspuff 43. Der Tank 41 kann darüber hinaus beispielsweise um die Vertiefung 47 herum angeordnet sein. Diese Anordnung der Einrichtung zur Befestigung des Gurtstraffers ist insbesondere auch für die in Fig. 1 dargestellte Ausführungsform vorteilhaft, wenn der Zylinder 3 nicht vollständig von der Schutzkappe 19 umschlossen ist, da Tank 41, Kardanwelle 45 und Auspuff 43 den Zylinder 3 nach außen hin schützen.

## Patentansprüche

1. Einrichtung zur Befestigung eines Gurtstraffers, der eine Kolben/Zylinder-Einheit aufweist, an einem Fahrzeug, wobei die Einrichtung als Schraubverbindung ausgebildet ist, mit einem am Mantel des Zylinders (3) geformten Gewinde (13) und einem an einem fahrzeugfesten Teil vorgesehenen Gegengewinde (15), an dem der Zylinder (3) angeschraubt wird, dadurch gekennzeichnet, daß das Gegengewinde (15) in einer Vertiefung im Fahrzeugboden (17) vorgesehen ist.

2. Einrichtung nach Anspruch 1, dadurch gekennzeichnet, daß das Gewinde (13) an der Außenseite oder der Innenseite des Mantels des Zylinders (3) geformt ist.

3. Einrichtung nach Anspruch 1 oder 2, dadurch gekennzeichnet, daß die Vertiefung eine Entlüftungsöffnung (20) aufweist.

4. Einrichtung nach Anspruch 3, dadurch gekennzeichnet, daß die Entlüftungsöffnung (20) abgedichtet ist und erst im Rückhaltefall freigelegt wird.

5. Einrichtung nach Anspruch 1, dadurch gekennzeichnet, daß die gesamte Vertiefung eine Durchgangsöffnung im Fahrzeugboden (17) ist.

6. Einrichtung nach einem der vorstehenden Ansprüche, dadurch gekennzeichnet, daß sich das Gewinde (13) über die gesamte Außenseite des Mantels des Zylinders (3) erstreckt.

7. Einrichtung nach einem der vorstehenden Ansprüche, dadurch gekennzeichnet, daß eine Verdrehsicherung (21) vorgesehen ist, die ein Verdrehen des Gurtstraffers nach dessen Befestigung im Fahrzeug verhindert.

8. Einrichtung nach einem der vorstehenden Ansprüche, dadurch gekennzeichnet, daß das Gegengewinde am Fahrzeugboden zwischen nach unten vorstehenden Fahrzeugbodenabschnitten und/oder unterhalb des Fahrzeugbodens vorgesehenen Fahrzeugteilen angeordnet ist.

9. Einrichtung zur Befestigung eines Gurtstraffers, der eine Kolben/Zylinder-Einheit aufweist, an einem Fahrzeug, dadurch gekennzeichnet, daß die Einrichtung als Bajonettverschluß ausgebildet ist, mit wenigstens einer an der Außenseite des Mantels des Zylinders (3) seitlich vorstehenden Lasche (23) und einer an einem fahrzeugfesten Teil vorgesehenen Bajonettfassung (27), in die der Zylinder (3) eingeschraubt werden kann.

10. Einrichtung nach Anspruch 9, dadurch gekennzeichnet, daß die Bajonettfassung in einer Vertiefung im Fahrzeugboden (17) vorgesehen ist.

11. Einrichtung nach Anspruch 10, dadurch gekennzeichnet, daß die Vertiefung eine Durchgangsöffnung im Fahrzeugboden (17) ist.

12. Einrichtung nach Anspruch 10 oder 11, dadurch gekennzeichnet, daß die Bajonettfassung in einem topfartigen Teil (25) ausgebildet ist, welches in der Vertiefung befestigt ist.

13. Einrichtung nach Anspruch 9, dadurch gekennzeichnet, daß die Bajonettfassung am Rahmen einer Rücksitzbank vorgesehen ist.

14. Einrichtung nach einem der Ansprüche 9 bis 13, dadurch gekennzeichnet, daß die Bajonettfassung am Fahrzeugboden zwischen nach unten vorstehenden Fahrzeugbodenabschnitten und/oder unterhalb des Fahrzeugbodens vorgesehenen Fahrzeugteilen angeordnet ist.

15. Gurtstraffer mit einer Kolben/Zylinder-Einheit, der mittels einer Einrichtung nach einem der Ansprüche 9 bis 14 am Fahrzeug befestigbar ist, dadurch gekennzeichnet, daß von der Außenseite der Mantelfläche des Zylinders (3) wenigstens eine Lasche (23) radial vorsteht, die Teil des Bajonettverschlusses zum Befestigen des Gurtstraffers am Fahrzeug ist.

16. Gurtstraffer nach Anspruch 15, dadurch gekennzeichnet, daß die Lasche (23) einstückig am Zylinder (3) angeformt ist.

17. Gurtstraffer nach Anspruch 16, dadurch gekennzeichnet, daß der Zylinder (3) am im eingebauten Zustand unteren Ende (11) stirnseitig offen ist und die Lasche (23) durch Umbiegen der Zylinderwandung gebildet ist.

## Claims

1. A device for fastening a belt tensioner, which comprises a piston/cylinder unit, to a vehicle, the device being configured as a screw connection, with a thread (13) formed on the shell of the cylinder (3) and a counter-thread (15) which is provided on a part which is not movable with respect to the vehicle and into or onto which the cylinder (3) is screwed, characterized in that the counter-thread (15) is provided in a depression in the vehicle floor (17).

2. The device according to claim 1, characterized in that the thread (13) is formed on the exterior or on the interior of the shell of the cylinder (3).

3. The device according to claim 1 or 2, characterized in that the depression has a ventilation opening (20).

4. The device according to claim 3, characterized in that the ventilation opening (20) is sealed and is not exposed until in the case of restraint.

5. The device according to claim 1, characterized in that the entire depression is a through opening in the vehicle floor (17).

6. The device according to any of the preceding claims, characterized in that the thread (13) extends over the entire exterior of the shell of the cylinder (3).

7. The device according to any of the preceding claims, characterized in that a locking member (21) against rotation is provided, which prevents rotation of the belt tensioner after its having been fastened in the vehicle.

8. The device according to any of the preceding claims, characterized in that the counter-thread is arranged on the vehicle floor between downwardly protruding vehicle floor sections and/or vehicle parts provided beneath the vehicle floor.

9. A device for fastening a belt tensioner, which comprises a piston/cylinder unit, to a vehicle, characterized in that the device is designed as a bayonet closure, with at least one tongue (23) protruding laterally on the exterior of the shell of the cylinder (3), and with a bayonet fitting (27) which is provided on a part which is not movable with respect to the vehicle and into which the cylinder (3) can be screwed.

10. The device according to claim 9, characterized in that the bayonet fitting is provided in a depression in the vehicle floor (17).

11. The device according to claim 10, characterized in that the depression is a through opening in the vehicle floor (17).

12. The device according to claim 10 or 11, characterized in that the bayonet fitting is constructed in a cup-shaped part (25) which is fastened in the depression.

13. The device according to claim 9, characterized in that the bayonet fitting is provided on the frame of a rear seat bench.

14. The device according to any of claims 9 to 13, characterized in that the bayonet fitting is arranged on the vehicle floor between downwardly protruding vehicle floor sections and/or vehicle parts provided beneath the vehicle floor.

15. A belt tensioner comprising a piston/cylinder unit, which is adapted to be fastened to the vehicle by means of a device according to any of claims 9 to 14, characterized in that at least one tongue (23) protrudes radially from the exterior of the shell surface of the cylinder (3), which tongue (23) is part of the bayonet closure for fastening the belt tensioner to the vehicle.

16. The belt tensioner according to claim 15, characterized in that the tongue (23) is formed integrally with the cylinder (3).

17. The belt tensioner according to claim 16, characterized in that the cylinder (3) is open on the end face at the lower end (11) in the installed state and that the tongue (23) is formed by bending the cylinder wall.

## Revendications

1. Dispositif servant à fixer sur un véhicule un tendeur de sangle qui présente une unité à piston et cylindre, ledit dispositif étant constitué sous la forme d'un vissage, avec un filetage (13) formé sur l'enveloppe du cylindre (3) et un taraudage (15) prévu sur une partie solidaire du véhicule, sur laquelle le cylindre (3) est vissé, caractérisé en ce que le taraudage (15) est prévu dans un renfoncement dans le plancher (17) du véhicule.

2. Dispositif selon la revendication 1, caractérisé en ce que le filetage (13) est formé sur le côté extérieur ou le côté intérieur de l'enveloppe du cylindre (3).

3. Dispositif selon l'une des revendications 1 ou 2, caractérisé en ce que le renfoncement présente un orifice de purge de l'air (20).

4. Dispositif selon la revendication 3, caractérisé en ce que l'orifice de purge de l'air (20) est fermé de façon étanche et n'est seulement libéré qu'en cas de retenue.

5. Dispositif selon la revendication 1, caractérisé en ce que la totalité du renfoncement est un orifice de passage dans le plancher (17) du véhicule.

6. Dispositif selon l'une des revendications précédentes, caractérisé en ce que le filetage (13) s'étend sur tout le côté extérieur de l'enveloppe du cylindre (3).

7. Dispositif selon l'une des revendications précédentes, caractérisé en ce qu'il est prévu un blocage en rotation (21), qui empêche le tendeur de sangle de tourner après sa fixation sur le véhicule.

8. Dispositif selon l'une des revendications précédentes, caractérisé en ce que le taraudage est disposé sur le plancher du véhicule entre des sections du plancher du véhicule qui font saillie vers le bas et/ou en dessous du plancher du véhicule.

9. Dispositif servant à fixer sur un véhicule un tendeur de sangle qui présente une unité à piston et cylindre, caractérisé en ce que le dispositif est constitué sous la forme d'un emboîtement à baïonnette, avec au moins un collier de fixation (23) qui fait latéralement saillie sur le côté extérieur de l'enveloppe du cylindre (3) et avec une douille à baïonnette (27) prévue sur une partie solidaire du véhicule et dans laquelle on peut visser le cylindre (3).

10. Dispositif selon la revendication 9, caractérisé en ce que la douille à baïonnette (27) est prévue dans un renfoncement dans le plancher (17) du véhicule.

11. Dispositif selon la revendication 10, caractérisé en ce que le renfoncement est un orifice de passage dans le plancher (17) du véhicule.

12. Dispositif selon l'une des revendications 10 ou 11, caractérisé en ce que la douille à baïonnette est constituée dans une pièce en forme de pot (25), qui est fixée dans le renfoncement.

13. Dispositif selon la revendication 9, caractérisé en ce que la douille à baïonnette est prévue sur le cadre d'une banquette arrière.

14. Dispositif selon l'une des revendications 9 à 13, caractérisé en ce que la douille à baïonnette est disposée sur le plancher du véhicule entre des sections du plancher du véhicule qui font saillie vers le bas et/ou en dessous du plancher du véhicule.

15. Tendeur de sangle, avec une unité à piston et cylindre, pouvant être fixé sur un véhicule au moyen d'un dispositif selon l'une des revendications 9 à 14, caractérisé en ce qu'à partir du côté extérieur de la surface enveloppe du cylindre (3) au moins un collier de fixation (23) fait saillie radialement, ledit collier faisant partie d'un emboîtement à baïonnette servant à fixer le tendeur de sangle sur le véhicule.

16. Tendeur de sangle selon la revendication 15, caractérisé en ce que le collier de fixation (23) est formé d'un seul tenant sur le cylindre (3).

17. Tendeur de sangle selon la revendication 16, caractérisé en ce que le cylindre (3), en position montée, est ouvert du côté frontal à l'extrémité inférieure (11) et le collier de fixation (23) est formé en repliant la paroi du cylindre.
